# EUROPÄISCHE PATENTSCHRIFT

(11) **EP 1 262 078 B1**
(45) Veröffentlichungstag und Bekanntmachung des Hinweises auf die Patenterteilung: **14.11.2007**
(21) Anmeldenummer: 01915077.0
(22) Anmeldetag: 05.03.2001
(51) Int. Cl.: H04Q 7/30

(54) **VERFAHREN UND VORRICHTUNG ZUM ÜBERTRAGEN VON SPRACHDATEN IN EINEM MOBILFUNKNETZ**
METHOD AND DEVICE FOR TRANSMITTING VOICE DATA IN A MOBILE RADIO NETWORK
PROCEDE ET DISPOSITIF POUR LA TRANSMISSION DE DONNEES VOCALES DANS UN RESEAU RADIOTELEPHONIQUE MOBILE

(30) Priorität: 06.03.2000 DE 10010887; 29.11.2000 DE 10059330
(43) Veröffentlichungstag der Anmeldung: 04.12.2002
(73) Patentinhaber: NOKIA SIEMENS NETWORKS S.P.A., 81541 München (DE)
(72) Erfinder: DROPMANN, Ulrich, 81543 München (DE); HAFERBECK, Ralf, 81829 München (DE); LANIG, Eva-Maria, 82110 Germering (DE)
(86) Internationale Anmeldenummer: PCT/DE2001/000826
(87) Internationale Veröffentlichungsnummer: WO 2001/067793

(56) Entgegenhaltungen:
- WO-A-00/47007
- WO-A-99/33250
- WO-A-99/53704
- GB-A- 2 315 190
- "Universal Mobile Telecommunications System (UMTS);Out of Band Transcoder Control; Stage 2 (3GPP TS 23.153 version 4.1.0 Release 4" ETSI TS 123153 V4.1.0, März 2001 (2001-03), Seiten 1-46, XP002172719 Sophia Antipolis,France in der Anmeldung erwähnt
- WANG J ET AL: "WIRELESS VOICE-OVER-IP AND IMPLICATIONS FOR THIRD-GENERATION NETWORK DESIGN" BELL LABS TECHNICAL JOURNAL,US,BELL LABORATORIES, Bd. 3, Nr. 3, 1. Juli 1998 (1998-07-01), Seiten 79-97, XP000782375 ISSN: 1089-7089

## Beschreibung

Mobilfunknetze sind dem Fachmann beispielsweise aus dem Fachbuch Jacek Biala "Mobilfunk und intelligente Netze', Vieweg- Verlag, ISBN 3-528-15302-4, insbesondere Seite 124-125, bekannt. Ein derartiges Mobilfunknetz kann eine Transcodierungs- und Ratenanpassungseinheit (=Transcoding and Rate Adaptation Unit = TRAU) in einem BSS umfassen, welche von Funkkanälen (mit z. B. 16 kbit/s bei Fullrate) Sprachdaten für die Übertragung über 64 Kbit/s-Kanäle einer Fernvermittlung (=z. B. Ubertragung über eine längere Festnetzstrecke etc. für das corenetwork eines Mobilfunknetzes) umcodiert. Bei einer Übertragung von einer Mobilstation über eine TRAU, ein FernvermittlungsTelekommunikationsnetz und eine weitere TRAU zu einer anderen Mobilstation entstehen durch die mehrfache Umcodierung in den beiden TRAU (also im TR. AU-Tandem) Qualitatsverluste, aufgrund welcher für GSM-Mobilfunknetze (GSM CJ. 53 Version 8. 00, R1999) eine sogenannte Tandem Free Operation (TFO), also eine Ubertragung ohne Umcodierung in den genannten beiden TRAU eines Datenpfades zwischen zwei Mobilstationen MS vorgeschlagen wurde.

Aufgabe der vorliegenden Erfindung ist eine effizient verbesserte Ubertragung zwischen Endgeräten über ein Mobilfunknetz.

Die Aufgabe wird jeweils durch die Gegenstande der unabhangigen Ansprüche gelöst.

Durch ein erfindungsgemäßes Verfahren bzw. eine erfindungsgemäße Konvertierungseinrichtung (TFO-TRFO-Konverter) wird einfach, effizient und kompatibel zu UMTS (3GPP TS 23. 153) auf einer Fernvermittlungsstrecke eine effiziente Bandbreitenutzung für eine Sprachdaten-Ubertragung ermöglicht.

Die Erfindung ermöglicht es von einem Endgerät in herkommlcher Weise bis zu einer Transcodierungs- und Ratenanpassungseinheit TRAU ubertragene, von der TRAU ohne Transcodierung (TFO) in ein Format größerer Bandbreite (z. B PCM-64 Kbit/s) an eine Vermittlungseinheit (Switch MSC) übertragene Sprachdaten in ein für eine Fernvermittlung (=z. B. Vermittlung an eine andere MSC) geeignetes Paketdatenformat zu konvertieren und weiterzuleiten, ohne hierfur das bestehende Mobilfunkzugangsnetz (GSM-BSS) verändern zu müssen. Damit ist in einem GSM-Netz eine Transcoder-free Operation (TrFO= Bettieb ohne Transcoder) am Ende eines Weitverkehrsnetzes (z. B. Core-network-edge eines Fernvermittlungsnetzes möglich. Ein erfindungsgemäßes Verfahren und eine erfindungsgemäße Vorrichtung können insbesondere die zu übertragenden Sprachdaten umformatieren und eine Umsetzung der Signalisierung ausführen. Es können von einer TRAU an eine MSC oder Konvertierungseinrichtung (TFO- TRFO-Konverter) übermittelte Signalisierungsdaten verwendet werden, um Parameter zu bestimmen fur eine Out-ofband-Codec- Negotiation (also für eine Verhandluna des geeigneten Codec), und/oder für eine IU-UP-Protocol-Codec Mode Modifikation (Modifikation des Codec-Modus). Durch eine erfindungsgemäße Konvertierungseinrichtung ist eine Emulation eines TRAU (Peer TRAU), welches sich in einem TFO-Modus befindet, zum Beantworten von Anfragen einer GSM-BSS-TRAU möglich. Die aus dem Datenstrom von einer Transcodierungs- und Ratenanpassungseinheit TRAU kommenden Sprachdaten können insbesondere in ATM-AAL2- oder Internetprotokoll-Pakete für die Übermittlung über ein Fernvermittlungstelekommunikationsnetz (beispielsweise ein Netz zwischen zwei MSC) umgewandelt werden und nach einer Übermittlung (zu einer anderen MSC etc.) entsprechend in komprimierte Sprachdaten zur Weiterübermittlung an eine TRAU in einen TFO-Modus rückumgewandelt werden.

Weitere Merkmale und Vorteile der Erfindung ergeben sich aus den Ansprüchen und der nachfolgenden Beschreibung eines Aus führungsbeispiels anhand der Zeichnung. Dabei zeigt
Figur 1 als Blockschaltbild die Übertragung von Daten von einer Mobilstation über eine TRAU zu einer MSC mit einer Konvertierungseinrichtung,
Figur 2 als Blockschaltbild die Funktionsblöcke insbesondere einer Konvertierungseinrichtung.

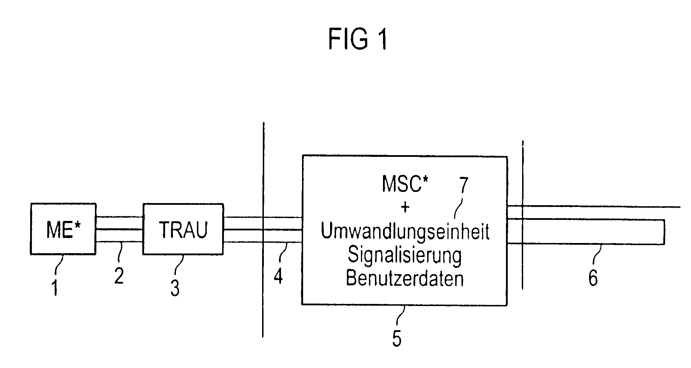

Figur 1 zeigt eine Mobilstation, welche eine Sprachdaten-und Signalisierungs-Verbindung 2 (Luftschnittstelle zu einer Transcodierungs- und Ratenanpassungseinheit TRAU 3 benutzt. Die TRAU 3 weist eine Sprachdaten-und Signalisierungsverbindung 4 zu einer Vermittlungseinrichtung (MSC) 5 auf. In der Vermittlungseinrichtung MSC 5 ist eine erfindungsgemäße Konvertierungseinrichtung (Converter) angeordnet, durch welche die von der TRAU 3 kommenden (4) Sprachdaten in ATM-AAL2-Pakete, IP-Pakete oder andere Pakete zur Weiterübermittlung über ein Fernvermittlungstelekommunikationsnetz (an eine andere MSC etc) umgepackt werden. Aufgrund der von der TRAU 3 ubermittelten Signalisierungsdaten wird die erforderliche Signaisierung (Inband und/oder Outband) fur die Übertragung von Sprachdaten über den Sprachdaten-und Signalisierungskanal 6 generiert.

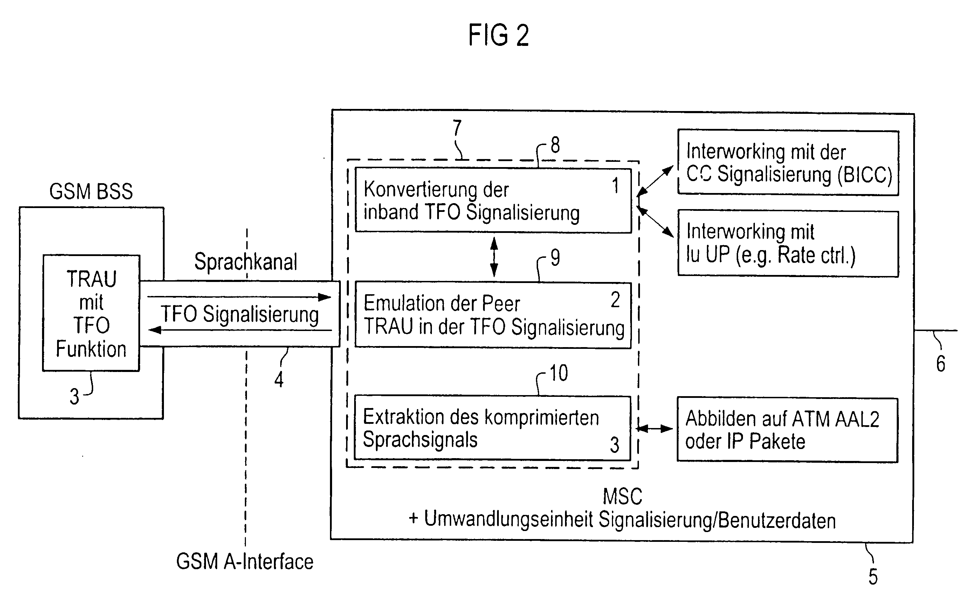

Figur 2 verdeutlicht den Aufbau der Konvertierungseinrichtung in bzw. an der Vermittlungseinrichtung MSC 5. In Figur 2 kommen aus einem Funksystem (beispielsweise GSM-BSS) Sprachdaten und Signalisierungsdaten über eine Transcodierungs- und Ratenanpassungseinheit TRAU 3 mit einer TFO-Fähigkeit (Fähigkeit zur Übertragung ohne Transcodierung) und den Kanal 4 zu einer MSC mit einer Konvertierungseinheit. In der Konvertierungseinrichtung 7 seitens der MSC 5 erfolgt eine Konvertierung der von einer TRAU 3 über einen Kanal 4 an die MSC 5 Übertragenen Inband-(über den Kanal 4 übertragen)-TFO- Signalisierung in ein Interworking mit einer CC- Signalisierung (BICC) und/oder ein Interworking mit einem IU UP-Protokoll (beispielsweise hinsichtlich einer Ratecontrol = Ratenkontrolle). Überdies erfolgt durch die Konvertierungseinrichtung 7 seitens der Vermittlungseinrichtung MSC eine Emulation einer im TFO-Signalisierungmodus befindlichen PeerTRAU (9). Von der TRAU 3 über einen Sprachka- nal/Signalisierungskanai 4 übertragene Sprachdaten werden vom Modul 10 extrahiert und als Paketdaten (hier ATM-AAL2 oder IP) über einen Kanal 6 zu einer weiteren Vermittlungseinrichtung etc. über ein Fernvermittlungstelekommunikationsnetz weitergeleitet.

Entsprechend einer Umwandlung von einer TRAU 3 kommender Sprachdaten und Signalisierungsdaten in einem Konverter' 7 seitens einer MSC 5 werden (nach Übertragung der Signalisierungsdaten und Sprachdaten über einen Kanal 6) durch einen Konverter seitens einer weiteren MSC die Sprachdaten und Sianalisierungsdaten zur dortigen Weiterleitung an eine weitere TRAU in herkömmliche Form konvertiert.

Eine Optimierung der Sprachdatenübertragung in einem Mobilfunknetz wird somit ermöglicht durch eine Konvertierungseinrichtung, welche von einer TRAU in einem TFO-Modus übermittelte Sprachdaten in ein Paketdatenformat zur Übermittlung über ein Fernvermittlungsnetz an eine weitere Vermittlungseinrichtung (MSC) umwandelt und dabei erforderlichenfalls die Signalisierung anpaßt.

## Patentansprüche

1. Verfahren zum Übertragen von Sprachdaten in einem Mobilfunknetz, **dadurch gekennzeichnet, daß** von einem Endgerät (ME 1) über eine Transcodierungs- und Ratenanpassungseinheit TRAU (3) ohne Transcodierung in ein Format größerer Bandbreite übertragene (4) Sprachdaten von einer Konvertierungseinrichtung (7) in ein Paketdatenformat konvertiert werden (10) und darauf von einer Vermittlungseinrichtung MSC (5) in ein Paketvermittlungstelekommunikationsnetz (6) zur Übermittlung an eine weitere Vermittlungseinrichtung gesendet werden.

2. Verfahren nach Anspruch 1, **dadurch gekennzeichnet, daß** das Paketdatenformat ein Internetprotokoll-Format oder ein ATM-Protokoll-Format, insbesondere ATM-AAL2, ist.

3. Verfahren nach Anspruch 1, **dadurch gekennzeichnet, daß** in der Konvertierungseinrichtung aus der von einer Transcodierungs- und Ratenanpassungseinheit TRAU (3) über einen Tandem Free Operation TFO-Sprachdatenkanal zur Konvertierungseinrichtung übertragenen Signalisierung Parameter entnommen und zur Generierung einer Signalisierung von der Vermittlungseinrichtung zu der weiteren Vermittlungseinrichtung verwendet werden.

4. Verfahren nach einem der vorhergehenden Ansprüche, **dadurch gekennzeichnet, daß** aus der von einer Transcodierungs- und Ratenanpassungseinheit TRAU (3) über einen TFO-Sprachdatenkanal zur Konvertierungseinrichtung übertragenen Signalisierung Parameter entnommen und zur Bestimmung von Parametern für eine Codec-Parameter-Verhandlung Codec Negotiation mit Einrichtungen des Mobilfunknetzes und/oder für eine Codec Mode-Modification verwendet werden.

5. Verfahren nach einem der vorhergehenden Anspruche, **dadurch gekennzeichnet, daß** von einer Konvertierungseinrichtung (7) eine im nicht-TRAU-transcodierenden Modus =TFO befindliche Transcodierungs- und Ratenanpassungseinheit TRAU (3) emuliert wird.

6. Verfahren nach einem der vorhergehenden Anspruche, **dadurch gekennzeichnet, daß** sich die Konvertierungseinrichtung in einer Vermittlungseinrichtung MSC des Mobilfunknetzes zum Übermitteln von Sprachdaten in/von einem Fernvermittlungstelekommunikationsnetz für das Mobilfunknetz befindet.

7. Vorrichtung zur Durchführung des Verfahrens nach einem der vorhergehenden Anspruche, mit einer Schnittstelle für von und/oder zu einer Transcodierungs- und Ratenanpassungseinheit TRAU 3 in einem nicht transcodierten Format Tandem Free Operation TFO zu übertragende Daten, mit einer Schnittstelle für von und/oder zu einem Fernvermittlungstelekommunikationsnetz (6) für ein Mobil- funknetz (1-5) in einem Paketdatenformat zu übertragende Sprachdaten, mit einer Konvertierungseinrichtung (7 ; 10) zum Konvertieren von Sprachdaten zwischen den beiden genannten Formaten TFO, Paketdatenformat.

8. Vorrichtung nach Anspruch 7, **dadurch gekennzeichnet, daß** sie ferner eine Einrichtung (8) zum Konvertieren der Signalisierung zwischen einer Transcodierungs- und Ratenanpassungseinheit (3) und der Konvertierungseinrichtung (7) in ein zur Weitervermittlung in das paketvermittelnde Fernvermittlungsnetz (6) geeignetes Format aufweist.

9. Vorrichtung nach Anspruch 7 oder 8, **dadurch gekennzeichnet, daß** sie ferner eine Einrichtung (9) zur Emulation einer in einem TFO-Signalisierungsmodus befindlichen TRAU gegenüber einer mit der Konvertierungseinrichtung verbundenen, weiteren TRAU (3) aufweist.

10. Vorrichtung nach einem der vorhergehenden Vorrichtungsanspruche, **dadurch gekennzeichnet, daß** sie so ausgebildet ist, daß sie die Sprachdaten in ein vorgegebenes Format TFO konvertiert und an eine Transcodierungs- und Ratenanpassungseinheit TRAU (3) zur Weitervermittlung an ein Endgerat übermittelt.

11. Vorrichtung nach einem der vorhergehenden Vorrichtungsansprüche, **dadurch gekennzeichnet, daß** das Paketdatenformat ein Internetprotokoll-Format oder ein ATM-Protokoll-Format, insbesondere ATM-AAL2, ist.

12. Vorrichtung nach einem der vorhergehenden Vorrichtungsansprüche, **dadurch gekennzeichnet, daß** sie so ausgebildet ist, daß in der Konvertierungseinrichtung aus der von einer Transcodierungs- und Ratenanpassungseinheit TRAU (3) über einen TFO-Sprachdatenkanal zur Konvertierungseinrichtung übertragenen Signalisierung Parameter entnommen und zur Generierung einer Signalisierung von der Vermittlungseinrichtung zu einer weiteren Vermittlungseinrichtung verwendet werden.

13. Vorrichtung nach einem der vorhergehenden Vorrichtungsansprüche, **dadurch gekennzeichnet, daß** sie so ausgebildet ist, daß aus der von einer Transcodierungs- und Ratenanpassungseinheit TRAU (3) über einen TFO-Sprachdatenkanal zur Konvertierungseinrichtung übertragenen Signalisierung Parameter entnommen und zur Bestimmung von Parametern für eine Codec-Parameter- Verhandlung mit Einrichtungen des Mobilfunknetzes und/oder für eine Codec Mode- Modification verwendet werden.

14. Vorrichtung nach einem der vorhergehenden Vorrichtungsansprüche, **dadurch gekennzeichnet, daß** sie so ausgebildet ist, daß von einer Konvertierungseinrichtung (7) eine im nicht-TRAU-transcodierenden Modus =TFO befindliche Transcodierungs- und Ratenanpassungseinheit TRAU (3) emuliert wird.

15. Vorrichtung nach einem der vorhergehenden Vorrichtungsansprüche, **dadurch gekennzeichnet, daß** sich die Konvertierungseinrichtung in einer Vermittlungseinrichtung MSC des Mobilfunknetzes zum Übermitteln von Sprachdaten in/von einem Fernvermittlungstelekommunikationsnetz für das Mobilfunknetz befindet.

## Claims

1. Method for transmission of voice data in a mobile radio network, **characterized in that** voice data transmitted from a terminal (ME 1) via a transcoding and rate adaptation unit TRAU (3) without transcoding in a format of wider bandwidth (4) is converted by a conversion device (7) into a packet data format (10) and is sent thereafter by a Mobile Switching Center MSC (5) into a packet switching telecommunication network (6) for transfer to a further Mobile Switching Center.

2. Method according to claim 1, **characterized in that** the packet data format is an Internet Protocol format or an ATM protocol format, especially ATM-AAL2.

3. Method according to claim 1, **characterized in that**, in the conversion device parameters are extracted from the signalling transmitted from a transcoding and rate adaptation unit TRAU (3) via a (Tandem-Free Operation) TFO voice data channel to the conversion device and used for generation of signalling from the Mobile Switching Center to the further Mobile Switching Center.

4. Method according to one of the previous claims, **characterized in that** parameters are extracted from the signalling transmitted from the transcoding and rate adaptation unit TRAU (3) via a TFO voice data channel to the conversion unit and are used for determining the parameters for a codec parameter negotiation with devices of the mobile radio network and/or for a codec mode modification.

5. Method according to one of the previous claims, **characterized in that** a transcoding and rate adaptation unit TRAU (3) which is in non-TRAU transcoding mode = TFO is emulated by a conversion device (7).

6. Method according to one of the previous claims, **characterized in that** the conversion device is located in a Mobile Switching Center MSC of the mobile radio network for transmission of voice data in/from a long-haul telecommunication network for the mobile radio network.

7. Device for executing the method in accordance with one of the previous claims, with an interface for data to be transmitted from and/or to a transcoding and rate adaptation unit TRAU 3 in a non-transcoded format (Tandem-Free Operation) TFO, with an interface for voice data to be transmitted from and/or to a long-haul telecommunication network (6) for a mobile radio network (1-5) in a packet data format, with a conversion device (7; 10) for converting voice data between the two said formats TFO, packet data format.

8. Device according to claim 7, **characterized in that** it further features a device (8) for converting the signalling between a transcoding and rate adaptation unit (3) and the conversion unit (7) into a format suitable for onward transfer into the packet-switched long-haul telecommunication network (6).

9. Device according to claim 7 or 8, **characterized in that** it further features a device (9) for emulation of a TRAU which is in a TFO signalling mode in relation to a further TRAU (3) connected to the conversion device.

10. Device according to one of the previous device claims, **characterized in that** it is embodied so that it converts the voice data into a predetermined format TFO and transfers it to a transcoding and rate adaptation unit TRAU for onwards transfer to a terminal.

11. Device according to one of the previous device claims, **characterized in that** the packet data format is an Internet protocol format or an ATM protocol format, especially ATM-AAL2.

12. Device according to one of the previous device claims, **characterized in that** it is embodied so that parameters are extracted from the signalling in the conversion unit transmitted from a transcoding and rate adaptation unit TRAU (3) via a TFO voice channel to the conversion unit and used for generating signalling from the Mobile Switching Center to a further Mobile Switching Center.

13. Device according to one of the previous device claims, **characterized in that** it is embodied so that it extracts parameters from the signalling transmitted from a transcoding and rate adaptation unit TRAU (3) via a TFO voice data channel to the conversion unit and uses them for determining parameters for a codec parameter negotiation with devices of the mobile radio network and/or for a codec mode modification.

14. Device according to one of the previous device claims, **characterized in that** it is embodied so that a transcoding and rate adaptation unit TRAU (3) which is in a non-TRAU transcoding mode is emulated by a conversion unit (7).

15. Device according to one of the previous device claims, **characterized in that** the conversion device is located in a Mobile Switching Center MSC of the mobile radio network for transmission of voice data into/from a long-haul telecommunication network for the mobile radio network.

## Revendications

1. Procédé pour la transmission de données vocales dans un réseau radiotéléphonique mobile, **caractérisé en ce que** des données vocales transmises (4) d'un terminal (ME 1) par le biais d'une unité de transcodage et adaptation de débit TRAU (3) sans transcodage dans un format de bande passante plus large sont converties (10) dans un format de données en paquets par un dispositif de conversion (7) puis sont envoyées d'un dispositif de commutation MSC (5) dans un réseau de télécommunications à commutation par paquets (6) en vue d'une transmission à un autre dispositif de commutation.

2. Procédé selon la revendication 1, **caractérisé en ce que** le format de données en paquets est un format de protocole Internet ou un format de protocole ATM, notamment ATM-AAL2.

3. Procédé selon la revendication 1, **caractérisé en ce que** des paramètres sont extraits dans le dispositif de conversion à partir de la signalisation transmise d'une unité de transcodage et adaptation de débit TRAU (3) vers le dispositif de conversion sur un canal de données vocales TFO (*Tandem Free Operation*) et sont utilisés pour générer une signalisation du dispositif de commutation vers l'autre dispositif de commutation.

4. Procédé selon l'une des revendications précédentes, **caractérisé en ce que** des paramètres sont extraits à partir de la signalisation transmise d'une unité de transcodage et adaptation de débit TRAU (3) vers le dispositif de conversion sur un canal de données vocales TFO et sont utilisés pour déterminer des paramètres pour une négociation de paramètres de codec (*codec negotiation*) avec des dispositifs du réseau radiotéléphonique mobile et/ou pour une modification de mode de codec.

5. Procédé selon l'une des revendications précédentes, **caractérisé en ce qu'**une unité de transcodage et adaptation de débit TRAU (3) se trouvant dans le mode de non transcodage de la TRAU (= TFO) est émulée par un dispositif de conversion (7).

6. Procédé selon l'une des revendications précédentes, **caractérisé en ce que** le dispositif de conversion se trouve dans un dispositif de commutation MSC du réseau radiotéléphonique mobile pour la transmission de données vocales dans/depuis un réseau de télécommunications à commutation distante pour le réseau radiotéléphonique mobile.

7. Dispositif pour l'exécution du procédé selon l'une des revendications précédentes, comprenant une interface pour des données devant être transmises par et/ou vers une unité de transcodage et adaptation de débit TRAU (3) dans un format non transcodé TFO (*Tandem Free Operation*), comprenant une interface pour des données vocales devant être transmises dans un format de données en paquets depuis et/ou vers un réseau de télécommunications à commutation distante (6) pour un réseau radiotéléphonique mobile (1-5), comprenant un dispositif de conversion (7 ; 10) pour la conversion de données vocales entre les deux formats mentionnés, TFO et format de données en paquets.

8. Dispositif selon la revendication 7, **caractérisé en ce qu'**il comprend, en outre, un dispositif (8) pour convertir la signalisation entre une unité de transcodage et adaptation de débit (3) et le dispositif de conversion (7) dans un format approprié pour la transmission dans le réseau de commutation distante à commutation par paquets (6).

9. Dispositif selon la revendication 7 ou 8, **caractérisé en ce qu'**il comprend, en outre, un dispositif (9) pour l'émulation d'une TRAU se trouvant dans un mode de signalisation TFO par rapport à une autre TRAU (3) reliée au dispositif de conversion.

10. Dispositif selon l'une des revendications de dispositif précédentes, **caractérisé en ce qu'**il est exécuté de manière à convertir les données vocales dans un format TFO prédéfini et à les transmettre à une unité de transcodage et adaptation de débit TRAU (3) en vue de leur retransmission à un terminal.

11. Dispositif selon l'une des revendications de dispositif précédentes, **caractérisé en ce que** le format de données en paquets est un format de protocole Internet ou un format de protocole ATM, notamment ATM-AAL2.

12. Dispositif selon l'une des revendications de dispositif précédentes, **caractérisé en ce qu'**il est exécuté de manière à ce que des paramètres soient extraits dans le dispositif de conversion à partir de la signalisation transmise d'une unité de transcodage et adaptation de débit TRAU (3) vers le dispositif de conversion sur un canal de données vocales TFO et soient utilisés pour générer une signalisation du dispositif de commutation vers un autre dispositif de commutation.

13. Dispositif selon l'une des revendications de dispositif précédentes, **caractérisé en ce qu'**il est exécuté de manière à ce que des paramètres soient extraits à partir de la signalisation transmise d'une unité de transcodage et adaptation de débit TRAU (3) vers le dispositif de conversion sur un canal de données vocales TFO et soient utilisés pour déterminer des paramètres pour une négociation de paramètres de codec avec des dispositifs du réseau radiotéléphonique mobile et/ou pour une modification de mode de codec.

14. Dispositif selon l'une des revendications de dispositif précédentes, **caractérisé en ce qu'**il est exécuté de manière à ce qu'une unité de transcodage et adaptation de débit TRAU (3) se trouvant dans le mode de non transcodage de la TRAU (= TFO) soit émulée par un dispositif de conversion (7).

15. Dispositif selon l'une des revendications de dispositif précédentes, **caractérisé en ce que** le dispositif de conversion se trouve dans un dispositif de commutation MSC du réseau radiotéléphonique mobile pour la transmission de données vocales dans/depuis un réseau de télécommunications à commutation distante pour le réseau radiotéléphonique mobile.
